# EUROPÄISCHE PATENTANMELDUNG

(11) **EP 0 822 038 A1**
(43) Veröffentlichungstag der Anmeldung: **04.02.1998**
(21) Anmeldenummer: 96112359.3
(22) Anmeldetag: 31.07.1996
(51) Int. Cl.: B25J 9/10, B25J 19/06

(54) **Kulissensteuerung**

(71) Anmelder: Gerhard Schubert GmbH, D-74564 Crailsheim (DE)
(72) Erfinder: Schubert, Gerhard, 74564 Crailsheim (DE)
(74) Vertreter: Vogeser, Werner, Dipl.-Ing.

(57) **Zusammenfassung**

Es ist die Aufgabe der Erfindung, eine Begrenzung für den Arbeitsbereich eines Roboterarmes (6) mittels einer Kulissensteuerung zu schaffen, um den aktuell gegebenen Arbeitsbereich (19) des Roboters anschaulich erkennen zu können und durch Wechseln der Steuerkulisse (2) einfach und kostengünstig verändern zu können. Ein derartige Kulissensteuerung zur Begrenzung des Arbeitsbereiches eines mehrteiligen Roboterarmes ist dadurch gekennzeichnet, daß die Steuerkulisse plattenförmig ausgebildet ist und wenigstens eine erste, zweidimensionale Steueraussparung (3) aufweist, und ein Steuerzapfen (5), der innerhalb der Steueraussparung bewegbar ist, durch die Ränder der Steueraussparung in seinen Bewegunsmöglichkeiten formschlüssig begrenzt wird, wobei der Steuerzapfen mit den Teilen des Roboterarmes bewegungsgekoppelt ist.

## Beschreibung

### I. Anwendungsgebiet

Die Erfindung betrifft eine Kulissensteuerung zur Begrenzung des Arbeitsbereiches eines Roboterarmes.

### II. Technischer Hintergrund

Die Funktionsteile eines Roboterarmes sind relativ zueinander bewegbar, beispielsweise stehen Unterarm und Oberarm aufeinander senkrecht und jeder der beiden Teile ist in seiner Längsrichtung teleskopierbar.

Bei einer anderen, sehr häufig gebrauchten Bauform eines Roboterarmes ist ein Oberarm um ein Hauptlager im Gehäuse des Roboters schwenkbar, und gegenüber dem freien Ende des Oberarmes ist ein Unterarm schwenkbar befestigt. Oberarm und Unterarm sind dabei in der gleichen oder zueinander parallelen Ebene schwenkbar, welche die Arbeitsebene des Roboterarmes darstellt. Zusätzlich können dann quer zu dieser Arbeitsebene z. B. am freien Ende des Unterarmes angeordnete, Funktionsteile bewegt werden, wobei auch diese Funktionsteile wiederum aus mehrteilig miteinander verbundenen Einzelteilen bestehen können.

Derartige Roboter mit Roboterarmen werden vielfach, insbesondere in der Verpackungstechnik, im Rahmen von Verpackungsstraßen eingesetzt, und dabei an mehreren Stellen der Verpackungsstraße hintereinander und auch an einer Stelle in Durchlaufrichtung der Verpackungsstraße mehrere Roboter parallel nebeneinander.

Dabei besteht häufig die Notwendigkeit, den theoretisch möglichen Arbeitsbereich des Roboterarmes innerhalb dessen Arbeitsebene auf einen konkreten Arbeitsbereich, also ein definiertes Fenster innerhalb der Arbeitsebene, zu beschränken, um Kollisionen des Roboterarmes mit umgebenden Bauteilen, insbesondere mit benachbart arbeitenden anderen Roboterarmen, zu vermeiden.

Da die verwendeten Roboter Serienteile sind, wird der jeweils gewünschte tatsächliche Arbeitsbereich immer erst in der aktuellen Einbausituation, also auch abhängig von der genauen Montageposition des Roboters zur Maschinenperipherie, vorgegeben.

Dies ist beispielsweise dadurch möglich, daß die Bewegungsbereiche jedes einzelnen Funktionsteiles des Roboterarmes, also beispielsweise Oberarm, Unterarm und der quer zur Arbeitsebene beweglichen weiteren Funktionsteile, durch Programmierung jeweils in ihrer Bewegung so begrenzt werden, daß in der Addition ihrer Bewegungsmöglichkeiten sich der gewünschte Arbeitsbereich ergibt.

Insbesondere für den Bediener eines Roboters bzw. einer Anlage, in welcher derartige Roboter verbaut sind, ist es jedoch schwierig, aus der vorhandenen Programmierung den tatsächlichen eingestellten Arbeitsbereich des Roboterarmes in natura zu erschließen.

### III. Darstellung der Erfindung

### a) Technische Aufgabe

Es ist daher die Aufgabe gemäß der Erfindung, eine Begrenzung für den Arbeitsbereich des Roboterarmes mittels einer Kulissensteuerung zu schaffen, um den aktuell gegebenen Arbeitsbereich des Roboters anschaulich erkennen zu können und durch Wechseln der Steuerkulisse einfach und kostengünstig verändern zu können.

### b) Lösung der Aufgabe

Diese Aufgabe wird durch die kennzeichnenden Merkmale des Anspruches 1 gelöst. Vorteilhafte Ausführungsformen ergeben sich aus den Unteransprüchen.

### c) Vorteile

Der Vorteil dieser Lösung liegt darin, daß die Steuerkulisse sehr einfach aufgebaut ist, also in der Regel eine zweidimensionale Gestalt aufweist, insbesondere die Steueraussparung der Steuerkulisse eine Ebene darstellt, und somit auch die plattenförmige Steuerkulisse selbst, und damit diese Steuerkulisse auch von Personal, welches mit der Programmierung von Steuerungen nicht vertraut ist, ausgewechselt als auch durch Vergrößern, Verkleinern oder Verlagern der Aussparung verändert werden kann. Selbst das Ausprobieren der Veränderung eines Arbeitsbereiches ist möglich, indem anstelle einer gefrästen Steuerkulisse die Kanten der Steuerkulisse einzeln provisorisch durch Flacheisen etc. vorgegeben und von Hand während des Betriebes verschoben werden, um unmittelbar die Auswirkung auf die Veränderung des Arbeitsbereiches des Roboterarmes überprüfen zu können.

### d) Weitere Ausgestaltungen

Besonders vorteilhaft ist die Kulissensteuerung dann anzuwenden, wenn die Übersetzung zwischen den Teilen des Roboterarmes, die den Roboterarm in einer gemeinsamen Arbeitsebene bewegen, so in die Bewegung des Steuerzapfens umgesetzt werden, daß die Bewegung des Steuerzapfens eine maßstäblich verkleinerte Bewegung des Roboterarmes darstellt. Dadurch gibt die Form der Steueraussparung in der Steuerkulisse - maßstäblich verkleinert - die Form des Arbeitsbereiches des Roboterarmes vor, wenn auch eventuell in gespiegelter Darstellung, so daß eine sehr gute Visualisierung des Zusammenhanges zwischen Veränderung der Steueraussparung in der Steuerkulisse und dadurch bedingte Veränderung des Arbeitsbereiches für den Bediener möglich ist.

Dabei ist es wichtig, daß die Bewegung der einzelnen Funktionsteile des Roboterarmes keine parallelen Bewegungen des Steuerzapfens ergeben, da hierdurch keine zweidimensionale, sondern eine verfälschende eindimensionale Bewegung des Steuerzapfens das Ergebnis wäre.

In einer besonders einfachen Ausführungsform sind die Teile des Roboterarmes unmittelbar und ggf. einstückig mit den den Steuerzapfen bewegenden Funktionselementen verbunden. Sind Steuerkulisse und Roboterarm weiter voneinander entfernt, ist auch jede andere Bewegungskoppelung mit mechanischen, pneumatischen und/oder elektrischen Hilfsmitteln möglich.

Eine besonders einfache mechanische Lösung der Ansteuerung des Steuerzapfens ist die Anordnung des Steuerzapfens an einer Ecke eines Hebelparallelogramms, welches an der gegenüberliegenden Ecke schwenkbar, jedoch ortsfest im Maschinengehäuse gelagert ist. Die von dieser ortsfesten Schwenkachse abstrebenden beiden Geberschenkel des Parallelogramms sind dabei mit dem Oberarm und Unterarm des Roboterarmes bewegungsgekoppelt.

Falls am Ende des Roboterarmes ein weiteres Bewegungselement sich quer zur Bewegungsebene des Roboterarmes bewegt und auch diese Bewegung durch die Kulissensteuerung begrenzt werden soll, kann dies geschehen, indem diese Bewegung quer zur Bewegungsebene des Roboterarmes in eine Bewegung eines zweiten Steuerzapfens umgesetzt wird, welcher sich bezüglich der Steuerkulisse wiederum in der Ebene der bereits vorhandenen ersten Steuerkulisse bewegt. Diese Bewegung kann beispielsweise eine Schwenkbewegung sein, so daß die für diesen zweiten Steuerzapfen vorgesehene zweite Steueraussparung ein bogenförmiger Schlitz in der Breite des zweiten Steuerzapfens sein kann. Vorzugsweise wird als Schwenkpunkt für den zweiten Steuerzapfen dabei ebenfalls die ortsfeste Schwenkachse des Parallelogramms zum Ansteuern des ersten Steuerzapfens sein.

Bei einem Roboterarm mit zueinander beweglichem Oberarm und Unterarm und quer zu deren Ebene verfahrbarem Greifteil wären damit im Bereich der Kulissensteuerung um die ortsfeste Schwenkachse drei Geberschenkel konzentrisch zueinander gelagert und unabhängig voneinander schwenkbar, lediglich bewegungsgekoppelt mit den ihnen zugeordneten Teilen des Roboterarmes.

Zusätzlich kann der gesamte Roboter bezüglich der Peripherie, an welcher er arbeitet, verschoben und in seiner exakten Position fixiert werden, beispielsweise um den Arbeitsbereich des Roboters gegenüber einem breiten Förderband, auf dem die zu ergreifenden Produkte angeliefert werden, zu verändern.

Wenn dabei die Kulissensteuerung am Gehäuse des Roboters angeordnet ist, und damit beim Verschieben des gesamten Roboters mitverschoben wird, ist eine besonders einfache Grobeinstellung des Arbeitsbereiches des Roboters gegeben, deren Feineinstellung dann durch die Kulisse bewirkt wird.

Die plattenförmige Steuerkulisse kann dabei insbesondere aus ihrer Arbeitsstellung in eine deaktivierte Stellung wegklappbar sein, wobei diese deaktivierte Stellung auch zum Auswechseln der plattenförmigen Steuerkulisse dienen kann.

Die Steuerkulisse kann auch in den beiden Richtungen ihrer Ebene verschiebbar und justierbar gegenüber dem Gehäuse des Roboters ausgeführt sein.

### e) Ausführungsbeispiele

Eine Ausführungsform gemäß der Erfindung ist im folgenden anhand der Figur beispielhaft näher beschrieben.

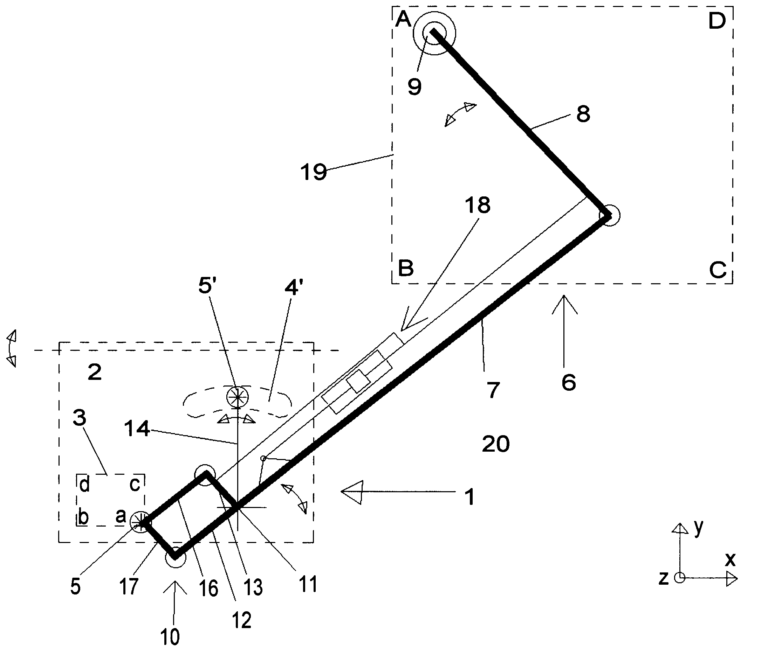

Fig. 1 zeigt einen mit einer Kulissensteuerung 1 ausgestatteten Roboter 20, dessen Roboterarm 6 aus einem um die Achse 11 schwenkbaren Oberarm 7 und einem gegenüber dem Oberarm schwenkbar befestigten Unterarm 8 besteht.

Die eindimensionale Bewegung des Oberarmes 7 und des Unterarmes 8 definieren die Arbeitsebene des Roboterarmes, welche parallel oberhalb z. B. eines Förderbandes, auf dem die zu ergreifenden Produkte angeliefert werden, liegt. um die darunter befindlichen Produkte aufnehmen zu können, ist am freien Ende des Unterarmes 8 ein quer zur Arbeitsebene des Roboterarmes 6 ausfahrbares Teleskop 9 angeordnet, an dessen Ende sich ein Picker zum Aufnehmen der nicht dargestellten Produkte befindet.

Der Oberarm 7 wird durch nicht dargestellte Antriebsmittel gegenüber der Parallelogrammachse 11, der Basislagerung des Roboterarmes verschwenkt, und der Unterarm 8 wird mit Hilfe eines z. B. doppelt wirkenden Pneumatikzylinders 18 gegenüber dem Oberarm 7 verschwenkt. Die Ansteuerung und der Antrieb und das Teleskop 9 sind nicht dargestellt.

Aus den eingangs genannten Gründen soll nun das freie Ende des Roboterarmes 6, also das Teleskop 9, nur einen bestimmten, durch die Ecken A bis D symbolisierten, Arbeitsbereich 19 abfahren können. Zu diesem Zweck ist mit dem Roboterarm 6 ein Parallelogramm 10 bewegungsgekoppelt, aus dessen Ebene ein erster Steuerzapfen 5 senkrecht zur Zeichenebene z. B. nach oben aufragt.

Parallel zur Bewegungsebene des Parallelogramms und in einer Höhe, in der noch ein Zusammenwirken mit dem Steuerzapfen 5 möglich ist, ist die in der Figur gestrichelt dargestellte ebene, plattenförmige Steuerkulisse 2 über dem Parallelogramm 10 angeordnet, und um ihre Hinterkante aus dieser Ebene wegklappbar und damit deaktivierbar.

Die Steuerkulisse 2 mit ihren Steueraussparungen 3 und 4 ist nur gestrichelt dargestellt, liegt aber - je nach Abstreberichtung der Steuerzapfen 5 - im Regelfall jedoch über dem Parallelogramm 10, um mit den Steuerzapfen 5 und 5' zusammenzuwirken.

Das Parallelogramm 10 ist um eine ortsfeste, im wesentlichen senkrecht von der Zeichenebene aufragende Parallelogrammachse 11, die bezüglich des Roboters 20 nicht ortsveränderlich ist, schwenkbar, indem der erste und zweite Geberschenkel 12, 13 unabhängig voneinander um diese Parallelogrammachse 11 schwenkbar sind.

An den Enden der ersten und zweiten Geberschenkel 12, 13 sind erste und zweite Passivschenkel 16, 17 gelenkig angeordnet und an ihren Enden gelenkig miteinander verbunden, so daß dieser der Parallelogrammachse 11 gegenüberliegende Punkt den aufragenden Steuerzapfen 5 trägt.

Die Geberschenkel 12, 13 sind mit dem Oberarm 7 und Unterarm 8 des Roboterarmes 6 bewegungsverbunden.

Bei der Lösung der Figur 1 ist der Oberarm 7 mit dem ersten Geberschenkel 12 einstückig ausgebildet, und um die Parallelogrammachse 11, welche gleichzeitig die Basislagerung für den Roboterarm 6 im Gehäuse des Roboters 20 darstellt, verschwenkbar. Auch eine Unterbrechung zwischen Oberarm 7 und erstem Geberschenkel 12 und eine dazwischen angeordnete Bewegungskopplung auf andere Art ist ebenso möglich.

Der zweite Geberschenkel 13 ist mit dem Unterarm 8 so wirkverbunden, daß sich dessen Relativbewegung zum Oberarm 7 auf den zweiten Geberschenkel 13 auswirkt.

Konkret wird der Unterarm 8 gegenüber dem Oberarm 7 mit Hilfe eines Pneumatikzylinders 18 verschwenkt.

Über einen Verbindungsschenkel ist die den Unterarm 8 beaufschlagende Kolbenstange oder direkt der Unterarm 8 mit dem zweiten Geberschenkel 13 so verbunden, daß dieser Geberschenkel 13 mit dem Unterarm 8 verschwenkt wird.

Die Festlegung des Arbeitsbereiches 19 für den Roboterarm 6 erfolgt dadurch, daß in der Steuerkulisse 2 eine erste, etwa rechteckige, Steueraussparung 3 angeordnete ist, durch dessen Ebene der Steuerzapfen 5 nach oben ragt. Der Steuerzapfen 5 kann also den Bereich der ersten Steueraussparung 3 nicht verlassen, was bewirkt, daß das freie Ende, also das Teleskop 9, des Roboterarmes 6 den mit der ersten Steueraussparung 3 korrespondierenden Arbeitsbereich 19 nicht überschreiten kann.

Zusätzlich soll noch die Hubhöhe des Teleskops 9 begrenzt werden. Dies geschieht dadurch, daß an der Parallelogrammachse 11 ein weiterer, unabhängig verschwenkbarer dritter Geberschenkel 14 angeordnet ist, welcher außerhalb des Bereiches der ersten Steueraussparung 3 endet und an seinem Ende ebenfalls einen zweiten Steuerzapfen 5' trägt.

Dieser dritte Geberschenkel 14 ist über nicht dargestellte Bewegungskopplung mit der Bewegung des Teleskops 9 gekoppelt. Für die Schwenkbewegung des Steuerzapfens 5', welcher ebenfalls die Ebene der Steuerkulisse 2 durchdringt, ist in dieser eine zweite Steueraussparung 8 in Form eines bogenförmigen Schlitzes um die Parallelogrammachse 11, also den Schwenkpunkt des dritten Geberschenkels 14 herum angeordnet. Durch die Größe des Winkelsegmentes, welches diese zweite, bogenförmige Steueraussparung 4 begrenzt, wird der Bewegungsbereich des Teleskops 9 in der lotrecht zur Zeichenebene stehenden Richtung begrenzt.

Die gesamte Kulissensteuerung kann sehr einfach dadurch außer Funktion gesetzt werden, daß die Steuerkulisse 2 hochgeklappt und damit außer Eingriff mit den Steuerzapfen 5 und 5' gebracht wird, woraufhin der Roboterarm 6 wiederum die volle, durch seine Dimensionierung und seine Maschinensteuerung mögliche, maximale Arbeitsbereichdimensionierung erhält.

## Patentansprüche

1. Kulissensteuerung zur Begrenzung des Arbeitsbereiches eines mehrteiligen Roboterarmes (6),
**dadurch gekennzeichnet, daß**
- die Steuerkulisse (2) plattenförmig ausgebildet ist und wenigstens eine erste, zweidimensionale Steueraussparung (3) aufweist, und
- ein Steuerzapfen (5), der innerhalb der Steueraussparung (3) bewegbar ist, durch die Ränder der Steueraussparung (3) in seinen Bewegungsmöglichkeiten formschlüssig begrenzt wird, wobei
- der Steuerzapfen (5) mit den Teilen des Roboterarmes (6) bewegungsgekoppelt ist.

2. Kulissensteuerung,
**dadurch gekennzeichnet, daß**
der Steuerzapfen (5) mit allen denjenigen Teilen (7, 8) des Roboterarmes (6), welche die Bewegung seines freien Endes in einer gemeinsamen Arbeitsebene bewirken, so bewegungsgekoppelt ist, daß die Bewegungen dieser einzelnen Teile (7, 8) des Roboterarmes (6) am Steuerzapfen (5) Bewegungen innerhalb der Steueraussparung (3) verursachen, die nicht vollständig parallel zueinander verlaufen.

3. Kulissensteuerung nach einem der vorhergehenden Ansprüche,
**dadurch gekennzeichnet, daß**
der Steuerzapfen (5) mit den Teilen des Roboterarmes (6) so funktionsgekoppelt ist, daß die Bewegung des Steuerzapfens (5) eine maßstäblich verkleinerte Bewegung des freien Endes des Roboterarmes (6) in dessen Arbeitsebene (15) darstellt.

4. Kulissensteuerung nach einem der vorhergehenden Ansprüche,
**dadurch gekennzeichnet, daß**
die Steuerkulisse (2) und erste Steueraussparung (3) eben sind.

5. Kulissensteuerung nach einem der vorhergehenden Ansprüche,
**dadurch gekennzeichnet, daß**
die Steuerkulisse (2) und Steueraussparung (3) in einer Ebene parallel zur Arbeitsebene (15) des Roboterarmes (6) angeordnet sind.

6. Kulissensteuerung nach einem der vorhergehenden Ansprüche,
**dadurch gekennzeichnet, daß**
der Steuerzapfen (5) von einem Eckpunkt eines Hebelparallelogramms (10) quer zur Ebene des Parallelogramms (10) aufragt, dessen gegenüberliegende Gelenkecke eine an einer festen Position gelagerte Parallelogrammachse (11) ist und wobei die beiden von der Parallelogrammachse (11) abstrebenden ersten und zweiten Geberschenkel (12, 13) jeweils mit einem der beiden Teile (z. B. Oberarm (7) bzw. Unterarm (8)) des Roboterarmes (6) bewegungsverbunden sind.

7. Kulissensteuerung nach einem der vorhergehenden Ansprüche,
**dadurch gekennzeichnet, daß**
der Oberarm (7) mit dem ersten Geberschenkel (12) einstückig ausgebildet ist und der Unterarm (8) mit dem zweiten Geberschenkel (13) parallel verschwenkt wird.

8. Kulissensteuerung nach einem der vorhergehenden Ansprüche,
**dadurch gekennzeichnet, daß**
um die Parallelogrammachse (11) ein dritter Geberschenkel (14) verschwenkbar ist, welcher mit einem dritten, insbesondere quer zur Arbeitsebene (15) des Roboterarmes (6) bewegbaren, Teil des Roboterarmes (6) bewegungsverbunden ist.

9. Kulissensteuerung nach einem der vorhergehenden Ansprüche,
**dadurch gekennzeichnet, daß**
am freien Ende des dritten Geberschenkels (14) ein zweiter Steuerzapfen (5') quer zur Ebene der Steuerkulisse (2) in diese hinein aufragt und in der Steuerkulisse (2) eine bogenförmige zweite Steueraussparung (4) entsprechend der kreisbogenförmigen Bewegungsmöglichkeit des Steuerzapfens (5') gegenüber der Parallelogrammachse (11) ausgebildet ist, die die Bewegungsmöglichkeiten des Steuerzapfens (5') formschlüssig begrenzt.

10. Kulissensteuerung nach einem der vorhergehenden Ansprüche,
**dadurch gekennzeichnet, daß**
die Steuerkulisse (2) aus ihrer Arbeitsebene wegklappbar ist.

11. Kulissensteuerung nach einem der vorhergehenden Ansprüche,
**dadurch gekennzeichnet, daß**
die Steuerkulisse (2) leicht demontierbar am Roboter angeordnet ist.

12. Kulissensteuerung nach einem der vorhergehenden Ansprüche,
**dadurch gekennzeichnet, daß**
die Parallelogrammachse (11) und die Schwenkachse des Oberarmes (7) des Roboterarmes (6) im Gehäuse des Roboters (20) räumlich getrennt sind.

13. Kulissensteuerung nach Anspruch 12,
**dadurch gekennzeichnet, daß**
eine mechanische Weiterleitung der Bewegungen der Teile (z. B. Oberarm (7) und Unterarm (8)) des Roboterarmes bezüglich dessen Lagerung im Gehäuse des Roboters (20) zur Parallelogrammachse (11) vorhanden ist.

14. Kulissensteuerung nach einem der vorhergehenden Ansprüche,
**dadurch gekennzeichnet, daß**
der gesamte Roboter (20) zusammen mit der Kulissensteuerung (1) in wenigstens einer Richtung seiner Arbeitsebene (15) bewegbar, insbesondere verschiebbar, ist.
